# FASCICULE DE BREVET EUROPEEN

(11) **EP 3 024 694 B1**
(45) Date de publication et mention de la délivrance du brevet: **07.08.2019**
(21) Numéro de dépôt: 14744042.4
(22) Date de dépôt: 22.07.2014
(51) Int. Cl.: E21F 13/00, B60P 1/02, B60P 1/64

(54) **VEHICULE ROULANT DE TRANSFERT DE LOURDES CHARGES A PLUSIEURS MODULES ARTICULES ET DE FAIBLE HAUTEUR**
RADFAHRZEUG ZUM FÖRDERN SCHWERER LASTEN MIT MEHREREN NIEDRIGEN GELENKIGEN MODULEN
WHEELED VEHICLE FOR TRANSFERRING HEAVY LOADS, HAVING A PLURALITY OF LOW-HEIGHT ARTICULATED MODULES

(30) Priorité: 24.07.2013 FR 1357309
(43) Date de publication de la demande: 01.06.2016
(73) Titulaire: Agence Nationale pour la Gestion des Déchets Radioactifs, 92298 Châtenay-Malabry (FR)
(72) Inventeur: PONS, Damien, F-75006 Paris (FR); HERVE, Jean-François, F-92310 Sèvres (FR); SOUTHWAY, Rudy, F-91190 Gif sur Yvette (FR); CROSNIER, François-Sylvain, F-78960 Voisins Le Bretonneux (FR)
(74) Mandataire: Brevalex
(86) Numéro de dépôt international: PCT/EP2014/065693
(87) Numéro de publication internationale: WO 2015/011125

(56) Documents cités:
- WO-A1-81/02554
- US-A- 3 612 312
- US-A- 4 823 896
- US-A1- 2005 230 934

## Description

### Domaine de l'invention

La présente invention concerne une architecture de véhicule particulièrement adaptée au transport de charges lourdes de forte densité moyenne, par exemple au transport de colis de déchets radioactifs, notamment à l'intérieur de galeries souterraines horizontales ou fortement inclinées.

### Art antérieur et problème posé

Les centrales nucléaires de production d'énergie électrique génèrent des déchets, dont certains ont une activité radiologique moyenne ou élevée, et/ou une vie longue. Ces déchets sont conditionnés en colis et enfermés dans des conteneurs de grande masse du fait de la protection anti-radiations qui entoure le colis. Un tel conteneur, souvent appelé « hotte », représente couramment une masse de l'ordre de cent trente mille (130 000) kilogrammes.

De façon fréquente, ces hottes ont une forme parallélépipédique et sont munis de pieds destinés à faciliter leur pose sur un engin de transport et leur dépose à partir de cet engin. C'est notamment le cas pour les hottes de transport des déchets à moyenne activité et vie longue générés par les centrales de production d'énergie électrique françaises. L'espace délimité sous la hotte par la hauteur des pieds est généralement de l'ordre d'un (1) mètre. Un plus grand espace conduirait à remonter le toit des galeries souterraines, donc à augmenter le coût de l'infrastructure, et un plus petit espace rendrait difficile la réalisation de véhicules ou remorques de transport pouvant passer sous la hotte entre les pieds.

Le transfert de ces hottes, pour les entreposer dans les galeries souterraines, suppose un transfert horizontal en surface, puis une descente au fond, et enfin un transfert horizontal au fond, avec le chemin inverse pour le conteneur vidé de ses déchets.

La descente au fond peut être réalisée par plusieurs moyens dont les principaux types sont un ascenseur, un chemin de fer (funiculaire, train à crémaillère...) circulant sur rails dans un tunnel ferroviaire, ou un véhicule équipés de roues circulant dans un tunnel routier.

Chacun de ces modes comporte des avantages et des inconvénients. Toutefois, la solution du véhicule circulant dans un tunnel routier comporte de nombreux avantages qui sont les suivants :
- Le tunnel routier est accessible à divers véhicules autres que celui qui transporte les colis, et peut notamment offrir un accès à des véhicules d'intervention ou de maintenance.
- Le véhicule qui emprunte le tunnel peut assurer, sans rupture de charge, les déplacements des hottes en surface et dans les galeries au fond, en supprimant ainsi des opérations de chargement et déchargement délicates et coûteuses en infrastructure.
- Un véhicule en panne ou accidenté peut plus facilement être extrait de la galerie qu'un engin de type funiculaire et donc être réparé sans interruption longue des opérations de transfert des hottes.

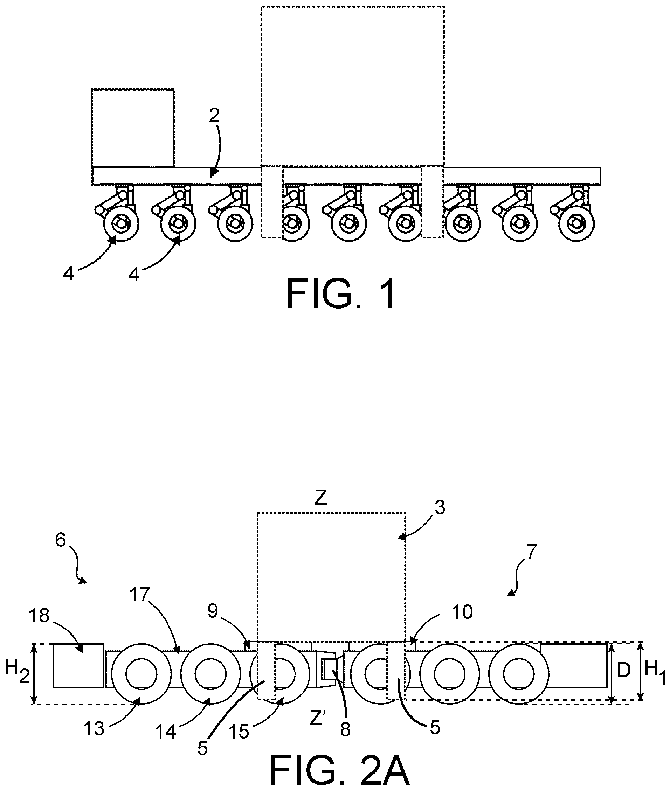

Les véhicules proposés pour ce type de mission, comme celui décrit dans le document de brevet DE 102005048455, sont généralement basés sur le système des plates-formes mobiles utilisées dans l'industrie pour porter des charges lourdes, comme on peut le voir sur la figure 1.

Ce type de véhicule comprend une structure 2 posée sur un assemblage de plusieurs rangées de trains de roulement de type bogie comportant chacun deux roues 4 placées de part et d'autre d'une jambe de suspension. Ces bogies comportent un bras en deux parties articulées permettant la suspension verticale, et un pivot d'axe sensiblement perpendiculaire au sol permettant le braquage de l'ensemble du bogie. Ce montage très répandu s'accompagne généralement d'une transmission de type hydraulique avec un moteur hydraulique placé dans chaque roue. Chacun de ces trains est directeur et le véhicule global peut alors être dirigé en orientant tous les trains dans la direction voulue.

La suspension de ces bogies est assurée par des vérins, généralement de type oléopneumatique, qui permettent d'affaisser la suspension pour engager l'arrière du véhicule sous la hotte, puis de la relever pour charger la hotte ; inversement pour la décharger.

L'espace entre le plateau de chargement et le sol étant occupé par les trains de roulement à bogie et leur balayage en braquage, l'ensemble constitué par la motorisation, la transmission et ses servitudes est regroupé pour former un compartiment en forme de cabine à l'avant ou à l'arrière du véhicule. Cette cabine, qu'elle comporte ou non un poste de conduite, dépasse significativement du plateau. Cette organisation apparaît sur la figure 1 du document de brevet CN 102745243 et sur les nombreux véhicules comportant de très nombreux essieux comme ceux fabriqués par exemple par des marques comme NICOLAS® ou COMETTO®.

La transmission de la puissance aux roues des bogies est généralement assurée par une transmission hydraulique, avec un ou deux moteurs hydrauliques par bogie. Cette solution est très critique pour les applications souterraines du fait des grandes quantités de fluide hydraulique, du très grand nombre de flexibles, raccords et de la complexité générale du circuit hydraulique de puissance qui peuvent engendrer des fuites et des incendies et entravent la fiabilité et la disponibilité.

Le remplacement, pour les trains à bogies, de la transmission hydraulique par une transmission électrique est en cours de développement et est annoncée. Cette évolution éliminera les inconvénients listés ci-dessus qui sont critiques pour toutes les applications souterraines.

Mais pour l'application au déplacement de hottes de déchets nucléaires, des inconvénients majeurs subsistent pour ce type d'architecture de véhicule ; ils sont les suivants.
- Les trains de roue de type bogie sont implantés sous le plateau, et fixés par l'axe du pivot vertical permettant la direction. Ce qui conduit à une hauteur minimale du plateau qui cumule au minimum le diamètre de la roue et l'épaisseur de la structure du plateau. Ce qui signifie que le diamètre des roues est notablement inférieur à la hauteur du plateau de chargement. Donc que l'emport d'une charge très lourde comme celle d'une hotte ne pourra se faire qu'avec un grand nombre de roues, donc de bogies.
- La présence d'une direction pour chaque bogie conduit à un nombre de directions élevés, donc à un nombre de commandes, flexibles, vérins, raccords élevé. Ce qui comporte un risque correspondant de défaillances, avec potentiel écoulement de fluide hydraulique. Il suffit que l'une des directions soit en avarie pour créer un problème demandant une intervention.
- La présence d'un grand nombre de trains de roue de type bogie pour porter la charge conduit à un plateau de grande longueur puisque la largeur est calibrée par l'écartement entre les pieds de la hotte et par la largeur de la galerie.
- Le chargement ou le déchargement de la hotte sur le plateau ne peut se faire que par l'arrière, puisque l'avant du véhicule comporte une excroissance accueillant la motorisation, la transmission et les servitudes. Cette impossibilité comporte des limitations, notamment pour le dégagement d'un véhicule en panne qui ne peut être extrait que par le côté de la cabine, ce qui peut ne pas être le côté par lequel l'accès d'un engin de dépannage est faisable. Cet inconvénient peut imposer à l'infrastructure de disposer dans la galerie d'un espace ou d'une boucle permettant au véhicule de faire demi-tour. Renvoyer le moteur et ses servitudes en porte à faux avant ou arrière est techniquement envisageable, mais cet allongement du porte-à-faux conduit alors à une longueur accrue du véhicule et à un encombrement en inscription en courbe qui peuvent être pénalisants dans une galerie.
- Le petit diamètre de roues imposé par l'architecture en bogie et par la hauteur du plateau conduit, même en multipliant les bogies, à utiliser des pneumatiques à un taux de charge trop proche du maximum admissible, donc à constater des usures très rapides préjudiciables à la disponibilité des véhicules.
- Le petit diamètre de roues imposé par l'architecture en bogie et par la hauteur du plateau empêche d'installer dans les roues ou à côté des roues des freins à disque à sec et à commande pneumatique de type poids lourd. Le montage retenu est généralement celui de freins multidisques à bain d'huile, avec les inconvénients que cela comporte pour le risque d'incendie.
- Pour ces véhicules, la pente de la galerie est relativement limitée.

L'objectif de l'architecture selon la présente invention est de s'affranchir de tous ces inconvénients et d'ajouter des avantages complémentaires qui sont particulièrement intéressants pour le transport de colis de déchets radioactifs à l'intérieur de galeries souterraines.

Un véhicule présentant les caractéristiques du préambule de la revendication 1 est connu du document de brevet US 3 612 312 A.

### Résumé de l'invention

Dans ce but, en considérant la logique du réemploi des trains à bogie des véhicules de manutention de charges lourdes en surface, et il a été renoncé au véhicule monobloc qui s'inscrit mal dans les courbes et ruptures de pente en galerie.

Les axes de raisonnement qui conduisent à cette architecture objet de la présente invention, sont :
- Il faut avoir les roues les plus grandes possibles, donc avec un diamètre proche de la hauteur disponible sous la hotte. Cela garantit la sécurité et réduit l'usure des pneumatiques en ne les sollicitant pas trop près de leur charge maximale admissible. Donc le sommet des pneumatiques doit être très proche du bas de la hotte.
- La masse totale portée par les pneumatiques est la masse de la hotte, environ centre trente mille kg (130 000) ajoutée à celle du véhicule lui-même, environ cinquante mille kg (50 000). Le nombre des pneumatiques sera de toute façon élevé, ce qui conduira à un véhicule long : donc il faut articuler le véhicule pour bien l'inscrire dans les galeries.

En effet, l'objet principal de l'invention et un véhicule roulant de transfert de lourdes charges montées sur pied, à une hauteur déterminée H1, ce véhicule comprenant :
- au moins deux modules roulants distincts ;
- des moyens de transfert du poids de la charge sur les au moins deux modules roulants.

Selon l'invention :
- les au moins deux modules roulants sont articulés directement entre eux ;
- les au moins deux modules roulants ont chacun au moins trois essieux de roues, dont le diamètre D est légèrement inférieur à la hauteur déterminée H1, à laquelle les lourdes charges sont montées sur pied ;
- le véhicule à une hauteur minimale déterminée H2, inférieure à la hauteur déterminée H1, à laquelle les lourdes charges sont montées sur pied, pour pouvoir saisir ou soulever la charge, en passant par en dessous, et
- des moyens d'élévation de la charge.

Selon l'invention, le véhicule comporte deux modules roulants, ayant chacun un dispositif de fixation de la charge, chaque dispositif de fixation ayant un degré de liberté en rotation par rapport à l'axe vertical, et un des deux dispositifs de fixation ayant un degré de liberté en translation longitudinale.

Dans la première réalisation préférentielle de l'invention, le véhicule a une articulation autour d'un axe vertical, entre les deux modules roulants et l'essieu de chaque module roulant étant le plus près de l'articulation est un essieu sans direction, tandis que les roues des autres essieux sont articulées en direction.

Dans la deuxième réalisation préférentielle de l'invention, le véhicule possède trois modules roulants, et :
- un module roulant central, ayant quatre dispositifs de fixation, qui reçoivent et bloquent la charge longitudinalement et transversalement ; et
- deux articulations relient le module central à chacun des deux autres modules, dites d'extrémité, avec un seul degré de liberté en rotation par rapport à l'axe vertical étant prévu pour permettre de transmettre une partie du poids de la lourde charge aux deux modules d'extrémités.

Dans une troisième réalisation de l'invention, le véhicule possède toujours trois modules roulants, et
- un plateau est prévu pour recevoir la charge et s'appuie sur les trois modules roulants ;
- le module central a un ensemble support en rotation transversal, bloquant le plateau en roulis et en lacet ; et
- les deux modules roulants d'extrémité possèdent une articulation support du plateau par un vérin, fixé au plateau et à un châssis du module roulant correspondant par deux articulations, réglables en translation verticale.

Dans ce cas, on utilise un accumulateur de pression alimenté par un groupe hydraulique.

Dans cette troisième réalisation, le vérin utilisé dans l'articulation des modules roulants d'extrémité est de type oléopneumatique.

Dans ces deuxième et troisième réalisations, on prévoit que :
- le module roulant central à trois essieux de roues, non directrices ;
- les deux modules roulants d'extrémité ont trois essieux de roues, dont l'essieu de roues le plus près de l'articulation qui a des roues non directrices, tandis que les deux autres essieux, plus éloignés de l'articulation, ont des roues directrices.

Dans ce dernier cas, les essieux à roues non directrices ont, de préférence, des roues jumelées.

Dans cette troisième version, l'ensemble support du module roulant central est, de préférence, monté sur deux vérins, pour la prise en charge et la dépose de la charge.

L'ensemble support du module roulant central peut également être monté sur deux leviers basculeurs, montés eux-mêmes sur le châssis du module central et actionnés par un vérin, fixé lui-même sur le châssis de ce module roulant central.

Enfin, pour faciliter son guidage, le véhicule possède des moyens de guidage latéral sous la forme de roues horizontales placées latéralement aux extrémités et en partie basse du véhicule, pour être en contact avec une partie basse d'une galerie dans la quelle circule le véhicule.

### Liste des Figures

L'invention et ses différentes caractéristiques seront mieux comprises à la lecture de la description suivante, qui est accompagnée de plusieurs Figures, représentant respectivement :
- Figure 1, en vue latérale, un exemple de véhicule roulant de l'art antérieur ;
- Figures 2A et 2B, des schémas relatifs à une première réalisation du véhicule roulant selon l'invention ;
- Figure 3, un schéma en vue de dessus d'une deuxième réalisation du véhicule roulant selon l'invention ;
- Figures 4A, 4B, 4C, des schémas relatifs à une troisième réalisation du véhicule roulant selon l'invention ;
- Figure 5, un schéma, en vue frontale, d'un dispositif de fixation d'un module roulant d'extrémité de la troisième réalisation du véhicule roulant selon l'invention ;
- Figure 6, en vue latérale, un dispositif de fixation du module central de la troisième réalisation du véhicule roulant selon l'invention ;
- Figure 7, en perspective cavalière, le véhicule selon la troisième réalisation descendant une pente et étant équipé de moyens de guidage, et
- Figure 8, en coupe, une galerie empruntée par un véhicule selon l'invention.

### Description détaillée de plusieurs réalisations de l'invention

La Figure 2A représente, en vue latérale, une première réalisation du véhicule roulant selon l'invention, comportant deux modules roulants 6 et 7, accouplés entre eux par une articulation 8, qui libère un degré de liberté par le mouvement de rotation de ces deux modules roulants 6 et 7 autour d'un axe vertical ZZ de l'articulation 8.

La charge lourde, à savoir une hotte 3, avec des pieds 5 est placée à cheval sur les deux modules roulants 6 et 7, et en particulier sur des dispositifs de fixation 9 et 10, respectifs des modules roulants 6 et 7. Les modules roulants 6 et 7 sont composés principalement d'un châssis 17 et de trois essieux de roues 13, 14 et 15. Enfin, en porte-à-faux, à l'extrémité de chacun des modules roulants 6 et 7, se trouve un espace utilisable 18 pour y placer les différents dispositifs de servitude, inhérents au fonctionnement de chacun des modules roulants 6 et 7.

Sur cette Figure 2A, on a fait figurer la hauteur H1 des pieds 5 de la hotte 3, le diamètre D des roues du véhicule roulant est la hauteur minimale H2 de ce même véhicule roulant en position basse. Pour toutes les réalisations selon l'invention, cette dernière est inférieure à la hauteur H1 des pieds 5 pour que le véhicule roulant, selon l'invention, puisse passer sous la hotte 3 avant de la saisir en soulevant sa partie centrale par un système de vérin explicité, plus loin. En conséquence, le diamètre D des roues du véhicule roulant doit être égal ou inférieur à la hauteur minimale H2 du véhicule roulant et donc à la hauteur des pieds 5 de la hotte 3.

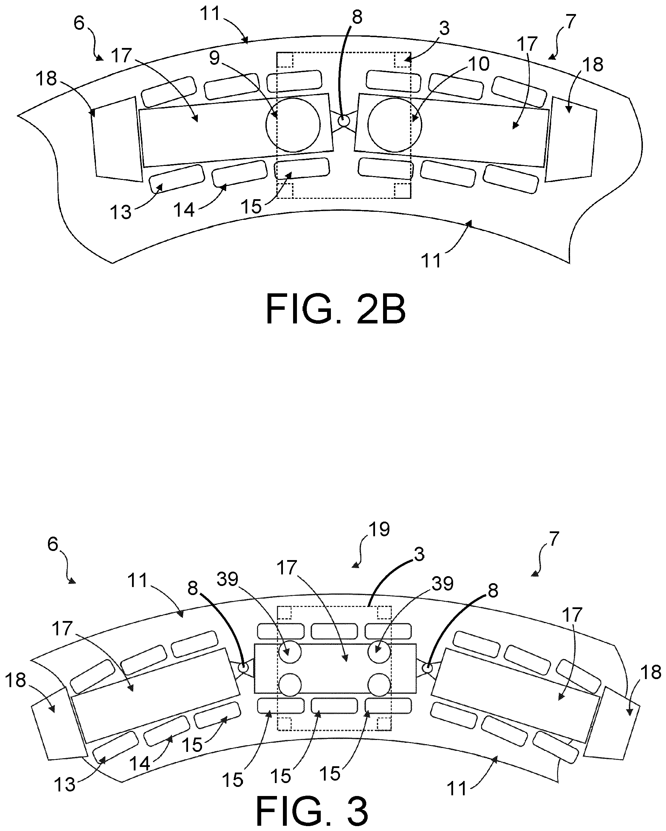

La Figure 2B montre cette même première réalisation du véhicule roulant selon l'invention, lors d'un virage, les deux modules roulants 6 et 7 étant inclinés l'un par rapport à l'autre. On constate que les roues 13 et 14 des deux essieux, les plus éloignés de l'articulation 8, sont équipées de roues directrices, tandis que l'essieu le plus rapproché de l'articulation 8 possède des roues 15, qui sont fixes en direction. De plus, ces deux modules roulants 6 et 7 ont été représentés avec trois essieux possédant chacun deux roues simples. L'invention peut également être réalisée avec des modules roulants comportant un nombre différent d'essieux, ou comportant des roues jumelées, au lieu de roues simples, ou encore un panachage entre des essieux avec des roues simples et des essieux avec des roues jumelées. De la même façon, il est envisageable d'utiliser des types de pneumatiques différents selon les essieux.

La hotte 3 est reliée au module roulant 6, sur la gauche de la Figure 2B, par un dispositif de fixation 9, qui bloque ou limite les mouvements de la hotte 3, dans les axes longitudinaux et transversaux et également bloque en rotation, de type roulis et tangage. En d'autres termes, le dispositif de fixation 9 libère la hotte 3 d'un seul mouvement de rotation autour d'un axe vertical. Le mouvement en translation vertical de la hotte 3 sur son dispositif de fixation 9 du module roulant 6, placé à gauche, est limité par le poids de la hotte 3, qui repose sur ce dispositif de fixation 9. Cette même hotte 3 est reliée au dispositif de fixation 10 de l'autre module roulant 7 placé sur la droite de la Figure 2B, de la même manière, mais avec une liberté en mouvement longitudinal en plus.

On notera que, au milieu de ces deux modules roulants 6 et 7, figure un espace disponible 17, dans lequel peut être placé les composants de motorisation et de transmission, nécessaires à ces deux modules roulants 6 et 7.

Enfin, sur cette Figure 2B, est schématisé les parties inférieures 11 des parois de la galerie, dans laquelle circule le véhicule roulant selon l'invention. On constate donc l'intérêt d'utiliser deux modules articulés 6 et 7 pour le même véhicule roulant.

La Figure 3 représente une deuxième réalisation, utilisant trois modules roulants, deux modules roulants d'extrémités 6 et 7 et un module roulant central 19. Sur cette Figure 3, les essieux ont été représentés avec des roues simples, mais peuvent être équipés de roues jumelées. Dans cette réalisation, la hotte 3 est placée sur le module roulant central 19. Une caractéristique particulière de cette deuxième réalisation est le report d'une partie du poids de la hotte 3, vers les modules roulants d'extrémités 6 et 7, au moyen d'articulations 8, qui ne présentent qu'un seul degré de liberté, en l'occurrence la liberté de rotation autour de l'axe vertical. En d'autres termes, les modules d'extrémités 6 et 7 sont bloqués en translation verticale, par rapport au module central 19. Ceci permet à ce dernier de transmettre aux modules roulants d'extrémité 6 et 7 une partie du poids de la hotte 3, qu'il supporte.

La hotte 3 est donc fixée sur le module central, au moyen de quatre dispositifs de fixation 39, qui bloquent les mouvements de la hotte 3, dans les axes longitudinaux et transversaux. Les quatre fixations centrales 39 du module roulant central 19 comportent ces vérins, non représentés, placés verticalement et constituent les moyens d'élévation de la charge, en l'occurrence la hotte 3.

Dans cette réalisation à trois modules, il est possible, comme le montre la Figure 3, de limiter les essieux directeurs aux deux modules d'extrémités 6 et 7 par leurs roues directrices 13 et 14. Le module central 19 est alors équipé de roues, non directrices 15.

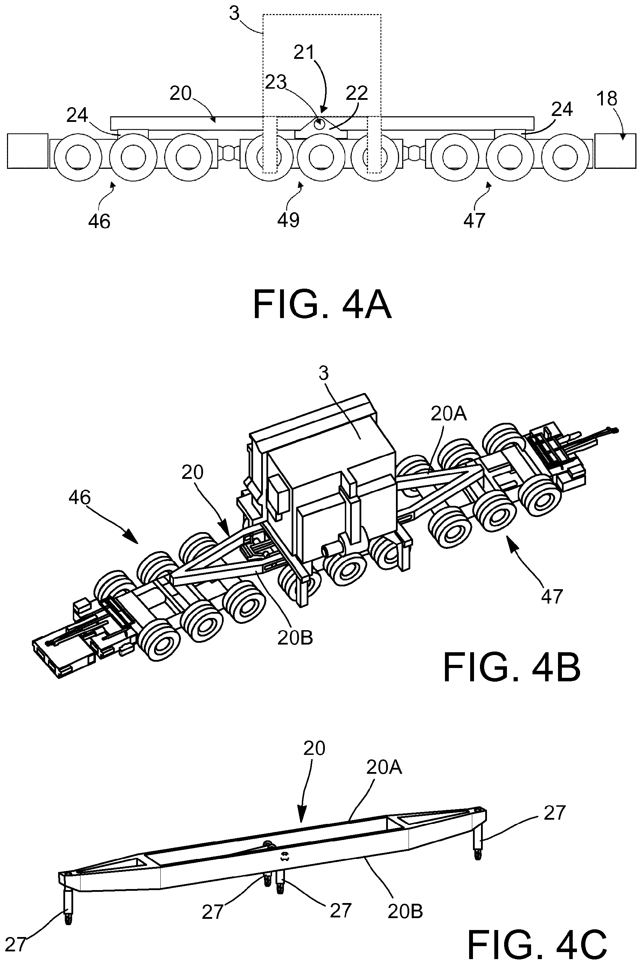

La Figure 4A montre latéralement une deuxième réalisation du véhicule roulant selon l'invention avec trois modules roulants, à savoir deux modules roulants d'extrémités 46 et 47 et un module roulant central 19. La caractéristique principale de cette réalisation est que la répartition de la charge de la hotte 3, entre les trois modules roulants 46, 47 et 49, est réalisée par un plateau de chargement 20. Celui-ci est relié au module central 49 par un ensemble supports 21, qui bloque, ou limite, les mouvements de la hotte 3, en translation verticale, mais autorise son oscillation autour d'un axe horizontal et transversal 23. La réalisation de cet ensemble de liaison 21 peut être, comme le montre la Figure 4A, effectuée par un pivot transversal et horizontal 23, mais tenu par deux chapes latérales 22. Toutefois, il est possible d'obtenir la même fonction par des solutions techniques différentes, par exemple utilisant des glissières et des galets.

Pour renvoyer une partie de la charge de la hotte 3 vers les modules roulants d'extrémités 46 et 47, chacun de ces derniers est relié au plateau de chargement 20, par une liaison ne gérant que le mouvement de translation verticale. L'effort vertical du plateau 20, sur chacun des deux modules d'extrémités 46 et 47, est ajusté en fonction du nombre de roues et de pneus présents sur chacun des trois modules roulants 46, 47 et 49. Dans cette troisième réalisation, on prévoit que les trois modules roulants ont tous le même nombre de pneumatiques identiques et que la répartition de la charge soit répartie de façon à s'approcher d'un tiers de la charge totale pour chacun de ces trois modules roulants 46, 47 et 49. Pour obtenir une telle répartition, les articulations supports 24, entre ces modules d'extrémités 46 et 47 et le plateau de chargement 20, permettent d'exercer un effort correspondant à sensiblement un tiers de la charge totale, représentée par le véhicule roulant et la hotte 3 qu'il transporte. De nombreuses solutions technologiques, pour exercer cet effort, peuvent être utilisées. On peut citer des vérins hydrauliques, des coussins hydrauliques, des vérins électriques, des ressorts réglables et des combinaisons de ces systèmes.

La Figure 4B montre, en vue cavalière, cette même réalisation. On y constate que le plateau de chargement 20 peut être constitué de deux longerons latéraux 20A et 20B se rejoignant à leurs extrémités, à l'endroit où le plateau de chargement 20 est en contact avec chacun des modules d'extrémités 46 et 47, par l'intermédiaire de l'articulation support 24.

La Figure 4C montre, en vue cavalière, cette structure caractérisant le plateau de chargement 20, avec ses deux longerons latéraux 20A et 20B, qui se rejoignent à leurs extrémités. L'articulation support 24, évoquée précédemment, est réalisée, dans cet exemple, au moyen d'un vérin 27, monté de façon articulée à la fois sur le plateau de chargement 20 et sur le châssis du module d'extrémité correspondant. De même, la limitation dans un mouvement vertical de l'ensemble support 21 de la Figure 4A est réalisée au moyen de deux vérins 27. Par contre, le mouvement de ces deux vérins 27 est limité par le montage avec les deux chapes 22 et l'axe transversal 23. De cette manière, le plateau de chargement 20 est donc maîtrisé en roulis. Ces quatre vérins 27 permettent, entre autres, la montée et la levée du plateau de chargement 20 permettant la saisie et la dépose de la hotte à transporter. De plus, grâce aux deux vérins 27 du module central, le plateau de chargement est limité en roulis.

On note que, avec cette technologie de vérins 27, aucun module roulant n'a de suspension, les essieux étant fixés rigidement à la structure, c'est-à-dire les châssis de ces modules roulants.

L'utilisation des vérins 27, au niveau des modules d'extrémités, permet d'équilibrer la répartition de la charge, lorsque le véhicule roulant affronte des ruptures de pentes sur la piste sur laquelle il évolue.

Ces vérins 27, placés au niveau des modules d'extrémités, permettent également de gérer les virages. En effet, le plateau de chargement 20 étant fixé longitudinalement sur le module roulant central, ses extrémités se trouvent excentrées longitudinalement par rapport aux modules roulants d'extrémités. Dans ce cas, la longueur des vérins 27 s'allonge. Enfin, les quatre vérins 27 assurent la prise en charge et la dépose de la hotte 3.

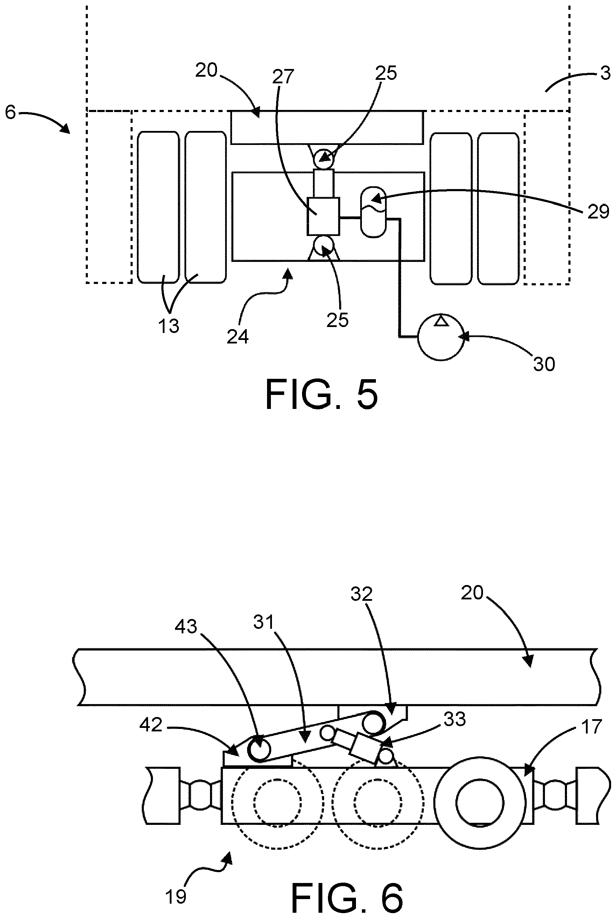

La Figure 5 montre, d'une autre manière, l'articulation support 24 des modules d'extrémités 46 et 47 et notamment la longueur du vérin 27. Ce dernier est alimenté en pression par un accumulateur 29, qui peut être maintenu en pression par un groupe hydraulique 30, installé à bord du véhicule. Les déplacements étant faibles, les quantités de fluides hydrauliques, mis en jeu, sont limités.

Dans cette réalisation où les articulations support 24, entre le plateau de chargement 20 et les modules roulants d'extrémités 46 et 47, sont effectuées par des vérins hydrauliques, pneumatiques ou électriques, pour l'ensemble support 21 du module roulant central, la capacité de déplacement vertical permettant de soulever et de déposer la hotte est également réalisée avec deux vérins 27.

La Figure 6 montre une réalisation particulière de l'ensemble support 21 du module roulant central. Il consiste à intercaler un levier basculeur 31 entre deux chapes latérales 42, fixées sur le châssis 17 du module roulant central 19. Le plateau de chargement 20 devra lui aussi être équipé d'une liaison articulée 32, analogue à l'ensemble formé par les chapes 22 et l'axe transversal 23 de la réalisation décrite relativement à la Figure 4A. Le levier basculeur 31 est actionné en rotation autour d'axes transversal 43 par un vérin 33 analogue, dans son fonctionnement au vérin 27, utilisé précédemment. L'avantage de ce mode de réalisation de l'ensemble support 21 est de maîtriser le déplacement vertical du plateau de chargement 20, tout en assurant un maintien robuste de ces mouvements dans les directions longitudinales et transversales.

Toutes ces réalisations, le support de la charge a lieu entre les roues des essieux et non pas au-dessus. De ce fait, en position basse la hauteur minimale H2 du véhicule roulant peut être pratiquement égale au diamètre D des roues qui est juste inférieur à la hauteur H1 des pieds 5 de la hotte 3. Par contre, en position haute, les éléments supportant la hotte 3 s'élèvent au-dessus de cette hauteur 1 des pieds 5 de la hotte 3.

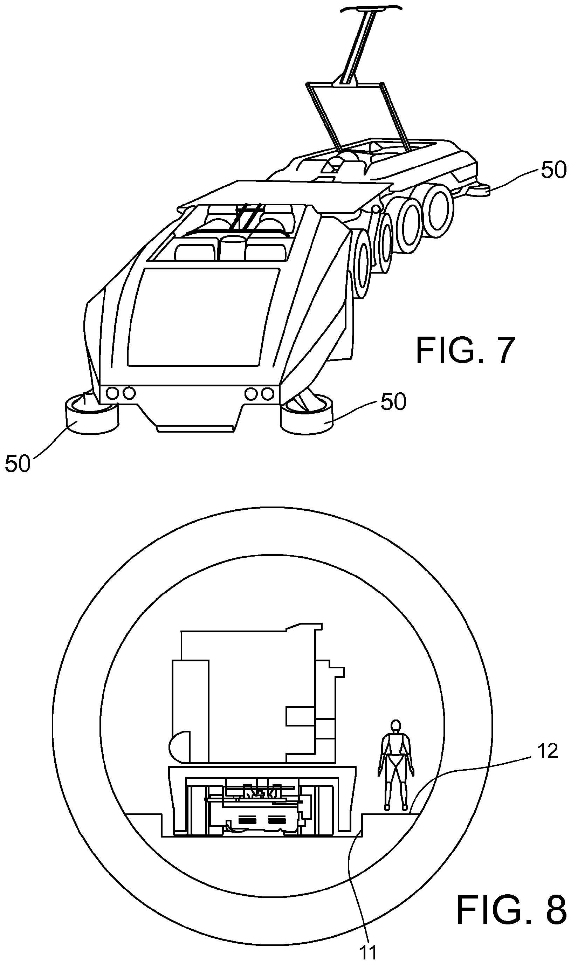

En référence à la Figure 7, le véhicule peut être avantageusement équipé de moyens de guidage placés latéralement à l'avant à l'arrière, en partie inférieure du véhicule. Ils sont constitués ici de roues horizontales 50 tournant librement autour d'axes verticaux et de façon décalée vers l'extérieur du véhicule par rapport aux roues de ce dernier, de manière à pouvoir prendre appui sur une paroi verticale inférieure de la galerie pour assurer le guidage des modules d'extrémité. Le véhicule a été représenté ici descendant une route de galerie dont la pente peut être de quinze pour cent (15%), ceci grâce, entre autres, au fait que la hauteur du convoi est minimisée par la faible hauteur du véhicule. De plus, cette réalisation montre l'absence de cabine ce qui concrétise le fait que ce véhicule peut être télécommandé.

Enfin, la Figure 8 montre, en coupe une galerie empruntée par le véhicule selon l'invention. Dans cet exemple, la galerie possède un trottoir 12 sur le côté duquel se trouve la partie inférieure 11 sur laquelle les moyens de guidage 50 représentés sur la Figure 7 peuvent prendre appui. Le diamètre de cette galerie circulaire est de l'ordre de sept mètres, la section de la galerie est donc minimisée, grâce à la compacité du véhicule.

### AVANTAGES DE L'INVENTION

- Un véhicule peut charger une hotte par ses propres moyens en s'engageant sous la hotte entre les pieds de la hotte, puis en soulevant son plateau pour décoller la hotte du sol et la porter. Le déchargement de la hotte s'effectuant de la même façon, dans l'ordre inverse.
- Le véhicule étant articulé, son inscription dans les courbes des galeries est améliorée et il devient possible de mettre un grand nombre de servitudes dans des porte-à-faux avant et arrière importants. Ce report des volumes occupés par les servitudes en porte-à-faux avant ou arrière du véhicule permet à celui-ci de passer entièrement sous la hotte, donc de pouvoir s'extraire dans les deux directions après avoir posé la hotte. L'avantage induit est de créer ainsi des volumes s'écrasant en cas de collision et absorbant de l'énergie.
- Le véhicule étant constitué d'au moins deux modules, l'articulation entre ces modules doit permettre la répartition de la charge entre les modules.
- Le véhicule étant articulé, il s'inscrit dans les virages en conservant une distance assez constante par rapport aux parois : cette qualité permet de réduire la largeur des galeries, et permet aussi de prévoir un guidage mécanique s'appuyant sur les parois, par exemple par des galets d'appui latéral sur les parois qui ont un axe de rotation sensiblement vertical.
- La conception de ce véhicule lui permet d'être réversible montée/descenteet rouler à 10 km/heures sur 5 à 20 kilomètres.
- Il peut être utilisé sur des très fortes pentes.
- Il peut être télécommandé, c'est-à-dire sans pilote embarqué.
- Il répond à la Réglementation Fondamentale de Sécurité appliquée aux installations nucléaires de bases souterraines.
- L'utilisation de moyens de guidage permet une redondance du système de guidage.
- La très faible hauteur du véhicule permet de minimiser la hauteur des galeries.

Enfin, il peut être facilement dépanné par d'autres engins routiers.

## Revendications

1. Véhicule roulant de transfert de lourdes charges, montées sur pieds à une hauteur déterminée H1, le véhicule roulant comportant :
- au moins deux modules roulants (6, 7, 19, 46, 47, 49) distincts ; et
- des moyens de transfert du poids de la charge sur les au moins deux modules roulants (6, 7, 19, 46, 47, 49),
dans lequel :
- les au moins deux modules roulants (6, 7, 19, 46, 47, 49) sont articulés directement entre eux ;
- les au moins deux modules roulants (6, 7, 19, 46, 47, 49) ont chacun au moins trois essieux de roues dont le diamètre D est légèrement inférieur à la hauteur déterminé H1 des pieds d'une lourde charge ;
- le véhicule roulant a une hauteur minimale H2 inférieure à la hauteur déterminée H1 des pieds de la charge, pour pouvoir passer par en dessous de ladite charge ; et
- des moyens d'élévation de ladite charge,
**caractérisé en ce qu'**il comprend deux modules roulants (6, 7), équipés chacun d'un dispositif de fixation (9, 10), présentant un degré de liberté en rotation autour de l'axe vertical, un des deux dispositifs de fixation, présentant un degré de liberté en translation longitudinale, les deux dispositifs de fixation (9, 10) possédant des vérins constituant des moyens d'élévation.

2. Véhicule roulant selon la revendication 1, possédant :
- une articulation (8) par rapport à l'axe vertical, entre les deux modules roulants (6, 7) ; et
- les roues (15) de l'essieu placé le plus près de l'articulation (8), étant sans direction, les roues (13, 14) des autres essieux étant articulées en direction.

3. Véhicule roulant selon la revendication 1, comprenant trois modules roulants, dont un module central (19, 49) et deux modules d'extrémités (6, 7, 46, 47), dans lequel :
- le module roulant central (19, 49) possède quatre fixations (39), qui reçoivent et bloquent ladite charge longitudinalement et transversalement, et comporte des vérins constituant les moyens d'élévation ; et
- deux articulations (8) relient le module roulant central (19) à chacun des deux modules roulants d'extrémité (6, 7), l'articulation (8) présentant un seul degré de liberté en rotation par rapport à l'axe vertical, permettant de transmettre une partie du poids de la charge aux modules roulants d'extrémité (6, 7).

4. Véhicule selon la revendication 1, comprenant trois modules roulants, à savoir un module roulant central (49) et deux modules roulants d'extrémités (46, 47) reliés par deux articulations 8 ; dans lequel :
- un plateau de chargement (20) est prévu pour recevoir la charge et s'appuyer sur les trois modules roulants (46, 47, 49) ;
- le module roulant central (49) comporte un ensemble support (21) pour supporter le plateau de chargement (20), en permettant une rotation transversale, tout en bloquant le plateau de chargement (20) en roulis et en lacet ; et
- les deux modules roulants d'extrémité (46, 47) ont chacun une articulation support (24) pour supporter le plateau de chargement (20) constituée d'un vérin (27), relié au plateau de chargement (20) et à un châssis du module roulant d'extrémité (46, 47), ces deux articulations support (24) étant réglables en translation verticale.

5. Véhicule roulant selon la revendication 3 ou 4, **caractérisé en ce que** :
- le module roulant central (19, 49) a trois essieux de roues non directrices ; et
- les deux modules roulants d'extrémités (6, 7, 46, 47) ont trois essieux dont les deux plus éloignés de l'articulation (8), ont des roues directrices (13, 14), l'essieu, placé le plus près de l'articulation (8) ayant des roues non directrices (15).

6. Véhicule roulant selon la revendication (2, 3 ou 5), **caractérisé en ce que** les essieux à roues non directrices (15) ont des roues jumelées.

7. Véhicule selon la revendication 4, en ce que l'ensemble support (21) a deux vérins oléopneumatiques (27), constituant les moyens d'élévation.

8. Véhicule roulant selon la revendication 4, les moyens d'élévation sont constitués par des vérins (27) pour les modules roulants d'extrémités (46, 47) complétés par un accumulateur de pression (29), alimenté par un groupe hydraulique (30).

9. Véhicule roulant selon la revendication 4, **caractérisé en ce que** l'ensemble support du module roulant central (49) est monté sur deux leviers basculeurs (31), monté lui-même articulé sur le châssis (17) du module roulant central (49) et actionné par un vérin (33), monté articulé lui-même sur le châssis (17), l'ensemble constituant ainsi les moyens d'élévation.

10. Véhicule selon la revendication 1, **caractérisé en ce que** des moyens de guidage latéral sont utilisés sous la forme de roues horizontales placées latéralement aux extrémités et en partie basse du véhicule, pour être en contact avec une partie basse 11 d'une galerie dans la quelle circule le véhicule.

## Patentansprüche

1. Rollendes Fahrzeug zum Transferieren von schweren Lasten, welche auf Füße mit einer vorbestimmten Höhe H1 montiert sind, wobei das rollende Fahrzeug umfasst:
- wenigstens zwei verschiedene rollende Module (6, 7, 19, 46, 47, 49); und
- Mittel zum Transferieren des Gewichts der Ladung auf den wenigstens zwei rollenden Modulen (6, 7, 19, 46, 47, 49),
wobei:
- die wenigstens zwei rollenden Module (6, 7, 19, 46, 47, 49) direkt untereinander angelenkt sind;
- die wenigstens zwei rollenden Module (6, 7, 19, 46, 47, 49) jeweils wenigstens drei Radachsen aufweisen, deren Durchmesser D leicht kleiner als die vorbestimmte Höhe H1 der Füße einer schweren Last ist;
- das rollende Fahrzeug eine minimale Höhe H2 aufweist, welche kleiner als die vorbestimmte Höhe H1 der Füße der Last ist, um unter der Last hindurchtreten zu können; und
- Mittel zum Anheben der Last,
**dadurch gekennzeichnet, dass** es zwei rollende Module (6, 7) umfasst, welche jeweils mit einer Befestigungsvorrichtung (9, 10) ausgerüstet sind, welche einen Freiheitsgrad in Rotation um die vertikale Achse aufweist, wobei eine der beiden Befestigungsvorrichtungen einen Freiheitsgrad in longitudinaler Translation aufweist, wobei die beiden Befestigungsvorrichtungen (9, 10) Hebeböcke aufweisen, welche die Mittel zum Anheben bilden.

2. Rollendes Fahrzeug nach Anspruch 1, aufweisend:
- ein Gelenk (8) bezüglich einer vertikalen Achse zwischen den beiden rollenden Modulen (6, 7); und
- wobei die Räder (15) der Achse, welche am nächsten zu dem Gelenk (8) platziert ist, ungelenkt sind, wobei die Räder (13, 14) der anderen Achsen gelenkt sind.

3. Rollendes Fahrzeug nach Anspruch 1, umfassend drei rollende Module, davon ein zentrales Modul (19, 49) und zwei Endmodule (6, 7, 46, 47), wobei:
- das zentrale rollende Modul (19, 49) vier Befestigungen (39) aufweist, welche die Ladung longitudinal und transversal aufnehmen und blockieren und Hebeböcke umfassen, welche die Mittel zum Anheben bilden; und
- zwei Gelenke (8) das zentrale rollende Modul (19) mit jedem der beiden rollenden Endmodule (6, 7) verbinden, wobei das Gelenk (8) einen einzelnen Freiheitsgrad in Rotation bezüglich der vertikalen Achse aufweist, wobei ein Übergeben eines Teils des Gewichts der Last an die rollenden Endmodule (6, 7) ermöglicht wird.

4. Fahrzeug nach Anspruch 1, umfassend drei rollende Module, nämlich ein zentrales rollendes Modul (49) und zwei rollende Endmodule (46, 47), welche durch zwei Gelenke (8) verbunden sind, wobei:
- eine Ladefläche (20) zum Aufnehmen der Ladung und Abstützen auf den drei rollenden Modulen (46, 47, 49) vorgesehen ist;
- das zentrale rollende Modul (49) eine Trageanordnung (21) zum Tragen der Ladefläche (20) bei einem Erlauben einer transversalen Rotation umfasst, während die Ladefläche (20) gegen Rollen und Gieren blockiert wird; und
- die beiden rollenden Endmodule (46, 47) jeweils ein Tragegelenk (24) zum Tragen der Ladefläche (20) aufweisen, welches durch einen Hebebock (27) gebildet ist, welcher an der Ladefläche (20) und an einem Fahrwerk des rollenden Endmoduls (46, 47) angebracht ist, wobei die beiden Tragegelenke (24) in vertikaler Translation einstellbar sind.

5. Rollendes Fahrzeug nach Anspruch 3 oder 4, **dadurch gekennzeichnet, dass**:
- das zentrale rollende Modul (19, 49) drei ungelenkte Achsen aufweist; und
- die beiden rollenden Endmodule (6, 7, 46, 47) drei Achsen aufweisen, von welchen die beiden am weitesten von dem Gelenk (8) entfernten gelenkte Räder (13, 14) aufweisen, wobei die Achse, welche am nächsten an dem Gelenk (8) platziert ist, ungelenkte Räder (15) aufweist.

6. Fahrzeug nach einem der Ansprüche (2, 3 oder 5), **dadurch gekennzeichnet, dass** die ungelenkten Radachsen (15) Doppelräder aufweisen.

7. Fahrzeug nach Anspruch 4, wobei die Trageanordnung (21) zwei ölpneumatische Hebeböcke (27) aufweist, welche die Mittel zum Anheben bilden.

8. Rollendes Fahrzeug nach Anspruch 4, wobei die Mittel zum Anheben durch Hebeböcke (27) für die rollenden Endmodule (46, 47) gebildet sind, welche durch einen Druck-Akkumulator (29) vervollständigt sind, welcher durch eine Hydraulikgruppe (30) versorgt wird.

9. Rollendes Fahrzeug nach Anspruch 4, **dadurch gekennzeichnet, dass** die Trageanordnung des zentralen rollenden Moduls (49) an zwei Kipphebeln (31) montiert ist, selbst an dem Fahrwerk (17) des zentralen rollenden Moduls (49) angelenkt und durch einen Hebebock (33) betätigt, welcher selbst an dem Fahrwerk (17) angelenkt ist, wobei die Anordnung somit die Mittel zum Anheben bildet.

10. Fahrzeug nach Anspruch 1, **dadurch gekennzeichnet, dass** Mittel zum lateralen Führen in der Form von horizontalen Rädern eingesetzt werden, welche lateral an den Enden und in dem unteren Teil des Fahrzeugs platziert sind, um in Kontakt mit einem unteren Teil 11 einer Galerie zu sein, in welcher das Fahrzeug fährt.

## Claims

1. A wheeled vehicle for transferring heavy loads, which are mounted on legs at a determined height H1, the wheeled vehicle including:
- at least two distinct wheeled modules (6, 7, 19, 46, 47, 49); and
- means for transferring the load weight on the at least two wheeled modules (6, 7, 19, 46, 47, 49),
- the at least two wheeled modules (6, 7, 19, 46, 47, 49) are directly articulated to each other;
- the at least two wheeled modules (6, 7, 19, 46, 47, 49) each have at least three wheel axles the diameter D of which is slightly lower than the determined height H1 of the legs of a heavy load;
- the wheeled vehicle has a minimum height H2 lower than the determined height H1 of the legs of the load, to be able to pass under said load; and
- means for raising said load,
**characterised in that** it comprises two wheeled modules (6, 7), each fitted with a fastening device (9, 10), having a degree of rotational freedom around the vertical axis, one of both fastening devices having a degree of longitudinal translational freedom, both fastening devices (9, 10) having jacks forming raising means.

2. The wheeled vehicle according to claim 1, having:
- a hinge (8) relative to the vertical axis, between both wheeled modules (6, 7); and
- the wheels (15) of the axle, placed closest to the hinge (8), being without steering, the wheels (13, 14) of the other axles being steeringly articulated.

3. The wheeled vehicle according to claim 1, comprising three wheeled modules, among which a central module (19, 49) and two end modules (6, 7, 46, 47), wherein:
- the central wheeled module (19, 49) has four fasteners (39), which receive and block said load longitudinally and transversely, and includes jack-forming raising means; and
- two hinges (8) connect the central wheeled module (19) to each of both end wheeled modules (6, 7), the hinge (8) having only one degree of rotational freedom relative to the vertical axis, enabling part of the load weight to be transmitted to the end wheeled modules (6, 7).

4. The vehicle according to claim 1, comprising three wheeled modules, that is a central wheeled module (49) and two end wheeled modules (46, 47) connected by two hinges 8; wherein:
- a loading platform (20) is provided to receive the load and rest on the three wheeled modules (46, 47, 49);
- the central wheeled module (49) includes a support assembly (21) to support the loading platform (20), allowing a transverse rotation while blocking the loading platform (20) against roll and yaw; and
- both end wheeled modules (46, 47) each have a support hinge (24) to support the loading platform (20) formed by a jack (27), connected to the loading platform (20) and to a frame of the end wheeled module (46, 47), these two support hinges (24) being vertically translationally adjustable.

5. The wheeled vehicle according to claim 3 or 4, **characterised in that**:
- the central wheeled module (19, 49) has three axles of non-steering wheels; and
- both end wheeled modules (6, 7, 46, 47) have three axles, the two farthest of which from the hinge (8) are steering wheels (13, 14), the axle placed closest to the hinge (8) having non-steering wheels (15).

6. The wheeled vehicle according to claim (2, 3 or 5), **characterised in that** the axles with non-steering wheels (15) are dual wheels.

7. The vehicle according to claim 4, **characterised in that** the support assembly (21) has two oleopneumatic jacks (27), forming raising means.

8. The wheeled vehicle according to claim 4, **characterised in that** the raising means are formed by jacks (27) for the end wheeled modules (4, 47) completed by a pressure accumulator (29), supplied by a hydraulic power pack (30).

9. The wheeled vehicle according to claim 4, **characterised in that** the support assembly of the central wheeled module (49) is mounted on two rock levers (31), itself mounted articulated on the frame (17) of the central wheeled module (49) and actuated by a jack (33), itself mounted articulated on the frame (17), the assembly thus forming the raising means.

10. The vehicle according to claim 1, **characterised in that** lateral guiding means are used in the form of horizontal wheels laterally placed at the ends and at the bottom part of the vehicle, to contact a bottom part (11) of a gallery in which the vehicle travels.
